# FASCICULE DE BREVET EUROPEEN

(11) **EP 3 408 515 B1**
(45) Date de publication et mention de la délivrance du brevet: **18.09.2019**
(21) Numéro de dépôt: 17706848.3
(22) Date de dépôt: 27.01.2017
(51) Int. Cl.: F02C 9/00

(54) **SYSTÈME DE RÉGULATION ÉLECTRONIQUE PARTIELLEMENT REDONDANT**
TEILWEISE REDUNDANTES ELEKTRONISCHES STEUERUNGSSYSTEM
PARTIALLY REDUNDANT ELECTRONIC CONTROL SYSTEM

(30) Priorité: 29.01.2016 FR 1650756
(43) Date de publication de la demande: 05.12.2018
(73) Titulaire: Safran Power Units, 31200 Toulouse (FR)
(72) Inventeur: PRIAT, Jérôme, 77550 Moissy-Cramayel (FR); GUILLAUMIN, Vincent, 77550 Moissy-Cramayel (FR)
(74) Mandataire: Regimbeau
(86) Numéro de dépôt international: PCT/FR2017/050191
(87) Numéro de publication internationale: WO 2017/129917

(56) Documents cités:
- EP-A1- 2 592 253
- US-A- 4 248 040
- US-A1- 2011 276 199
- US-A1- 2012 101 663

## Description

### DOMAINE TECHNIQUE GENERAL

L'invention concerne le domaine de la gestion de turbine à gaz, notamment pour la propulsion, comme un moteur d'hélicoptère, d'aéronef, de missile ou de drone, ou encore pour la génération d'énergie, comme une unité auxiliaire de puissance (APU en anglais, pour « *Auxiliary Power Unit* »).

Plus précisément, l'invention concerne les systèmes de régulation électronique à pleine autorité pour turbine à gaz.

Ces systèmes sont connus sous le nom de FADEC, pour « *Full Authority Digital Engine Control* », et servent à commander et réguler la turbine à gaz en fonction par exemple de données issues de capteurs ou d'instructions.

D'une façon plus générale, ces systèmes de régulation appartiennent au domaine des unités de contrôle électronique de turbine à gaz, généralement appelée EECU pour « *Electronic Engine Control Unit* ».

### ETAT DE L'ART

Les FADEC doivent obéir à des contraintes de fiabilité opérationnelle exigeantes. Il s'agit par exemple du MTBF, pour « *Mean Time Before Failure* » pour assurer qu'il n'y ait aucun incident en exploitation ou encore du taux de fiabilité d'une APU utilisées pour des applications ETOPS (pour « *Extended-range Twin-engine Operation Performance Standards* », c'est-à-dire pour des vols opérant à plus d'une heure d'un aéroport de secours) ou pour des opérations d'urgence, qui doit être supérieur 10⁻⁶/heure (taux de défaut par heure de fonctionnement) en ce qui concerne les défauts « arrêt en vol » ou « non démarrage » en vol.

Il existe une architecture de FADEC particulière, dite «à double canal », qui permet d'obtenir la fiabilité requise. Les documents EP2592253, GB2355081 et US2005217274 décrivent cette architecture avec quelques variantes.

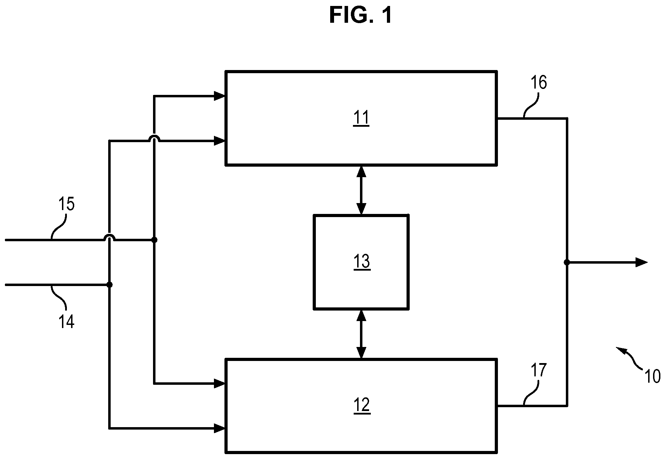

En référence à la **figure 1****,** un système de régulation 10 à double-canal comprend deux unités électroniques de régulation 11, 12 redondantes, avec leurs entrées et sorties respectives, ainsi qu'un dispositif de commutation 13 entre les deux unités 11, 12. Ces deux unités sont identiques en matière de fabrication, de structure, d'architecture, de composant et de fonctionnalités. En cas de panne de l'une d'entre elle, le dispositif de commutation 13 effectue le basculement vers l'autre, ce qui assure la continuité du traitement des données.

A cette fin, les entrées qui proviennent des capteurs 14 sont aussi dédoublées, toute comme l'alimentation en énergie 15. Chacune des unités 11, 12 comprend une sortie propre de commande 16, 17. Chaque unité 11, 12 comprend notamment une interface de conversion électrique.

Il y a ainsi une totale redondance physique, des unités et de la chaine de traitement des données. Cela signifie que l'information peut être traitée exactement de la même façon par la première et la deuxième unités 11, 12.

En pratique, chaque unité 11, 12 peut être composée d'une carte régulation et d'une carte surveillance, la carte surveillance de l'une surveillant la carte régulation de l'autre. Lorsqu'une anomalie est détectée par une carte surveillance, cette dernière contrôle le dispositif de commutation 13 pour provoquer le basculement.

Afin de contrôler le fonctionnement (détection de panne dormante) et de répartir l'utilisation des deux unités 11, 12, il est prévu de changer d'unité à chaque démarrage de la turbine.

Ces FADEC double-canal présentent une plus grande fiabilité opérationnelle que les FADEC simple canal qui présentent un taux de fiabilité non acceptable de 10⁻⁵/heure pour les applications spécifiques mentionnées précédemment.

En revanche, les FADEC double canal sont complexes à développer et coûteux comparativement à un FADEC simple canal. En outre, il demeure un risque de panne commune sur un FADEC double canal, lié au fait que les deux canaux sont identiques en matière d'architecture et de fabrication.

### PRESENTATION DE L'INVENTION

La présente invention vise à simplifier le développement et la fabrication des FADEC existants en proposant un système de régulation électronique asymétrique d'une turbine à gaz selon la revendication 1 configuré pour réguler un ensemble de fonctions associées à des données d'entrées logiques ou issues de capteurs et associées à des données de sorties notamment pour actionneur, ledit système comprenant :
- un unité électronique de régulation primaire, configurée pour traiter l'intégralité de l'ensemble de fonctions,
- une unité électronique de régulation secondaire, partiellement redondante avec l'unité primaire, configurée pour ne traiter qu'un sous-ensemble strict de fonctions suffisantes pour maintenir en fonctionnement ou démarrer la turbine à gaz selon un mode dégradé acceptable lorsque l'unité primaire est en défaut,
- un module de sélection et de commutation pour la sélection et la commutation de l'une ou l'autre des unités primaire et secondaire pour la régulation de la turbine à gaz en fonction d'un état de fonctionnement de ladite unité primaire.

L'invention propose donc un système de régulation à deux canaux asymétriques, adapté pour ne traiter qu'une partie des fonctions lorsque l'unité primaire présente un dysfonctionnement. Cette architecture particulière permet de diminuer la complexité de réalisation comparativement à un FADEC double canal tout en maintenant un taux de fiabilité équivalent pour les fonctions redondées. En outre, l'asymétrie structurelle, qui se répercute en matière d'électronique, de fonctionnalités et de composants permet de s'affranchir des défauts de mode commun liés à la similarité entre les deux unités d'un FADEC double canal.

L'invention peut comprendre les caractéristiques suivantes, prises seules ou en combinaison :
- le sous-ensemble strict de fonctions suffisantes correspond aux fonctions vitales de la turbine à gaz,
- l'unité primaire et l'unité secondaire sont dissimilaires en matière d'architecture, mais aussi de composants et de traitements de données,
- l'unité primaire est implémentée par un circuit numérique et l'unité secondaire est implémentée par un circuit analogique,
- l'unité primaire comprend un microcontrôleur piloté par une solution logicielle et l'unité secondaire comprend un circuit logique programmable sans logiciel,
- l'unité secondaire est configurée pour contrôler l'état de fonctionnement de l'unité primaire et dans lequel le dispositif de commutation est inclus dans l'unité secondaire,
- l'unité secondaire comprend moins de composants que l'unité primaire, afin d'obtenir une fiabilité améliorée,
- l'unité secondaire ne traite pas les entrées suivantes (liste non exhaustive):
   Capteur de température d'entrée d'air turbine,
   Capteur de température de sortie de gaz,
   Capteur de limaille huile,
   Capteur de colmatage filtre à huile,
   Capteur de niveau d'huile,
   Capteur de pression d'huile,
   Capteur de température huile,
   Capteur de colmatage filtre à carburant,
   Capteur de température carburant,
   Capteur de pression ambiante,
   Capteur de température ambiante,
   Informations logiques :
      SOL-VOL
      Informations 'WARNING' des équipements (boitier d'allumage, pompe à carburant, contrôleur alternateur, etc.),
- l'unité secondaire traite uniquement les entrées suivantes (liste non exhaustive):
   Capteur de vitesse,
   Information logique : start/stop de la turbine, et commande les sorties suivantes :
      Moteur de lancement,
      Allumeurs,
      Vanne de purge d'huile,
      Voyants « Turbine à gaz On » et « Turbine à gaz Off », et régule le doseur carburant.
- chaque unité comprend une interface de gestion des alimentations configurée pour fournir une tension et une intensité adaptée au fonctionnement de leur unité respective
- les deux unités ont des temps de cycle/calcul distincts, pour avoir des points de susceptibilités électromagnétiques distincts.

L'invention concerne aussi un ensemble comprenant une turbine à gaz et un système de régulation asymétrique tel que décrit précédemment.

Enfin l'invention concerne aussi un aéronef, un hélicoptère, un drone, un missile ou un véhicule comprenant un ensemble tel que présenté précédemment.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 déjà présentée illustre schématiquement un FADEC double canal comprenant deux unités identiques en parallèle, permettant une redondance totale du traitement des données,
- La figure 2 représente schématiquement un système de régulation selon l'invention, avec une unité secondaire formant une redondance partielle d'une unité primaire,
- La figure 3 représente un mode de réalisation plus détaillé du système de régulation de la figure 2.

### DESCRIPTION DETAILLEE

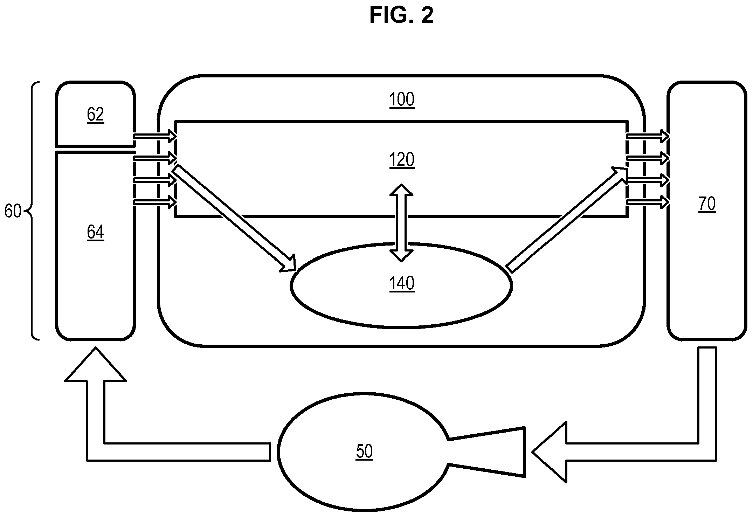

La **figure 2** schématise un système de régulation électronique asymétrique 100 d'une turbine à gaz 50. La description détaillée sera illustrée avec un aéronef propulsé par la turbine à gaz 50.

La description détaillée s'applique similairement au GAP (Groupe Auxiliaire de Puissance), plus communément appelé APU (pour « *Auxiliary Power Unit* » en anglais), ou encore à toute turbine à gaz 50 pilotée par un système pleine autorité (hélicoptère, drone, missile, etc.) Le système électronique de régulation asymétrique 100 reçoit en entrée différents types de données 60 et, à l'aide de ces données, commande ou régule des sorties 70 de différentes natures. On parlera plus généralement de « fonctions » pour désigner à la fois les données d'entrée et les données de sorties liées à une fonction particulière de la turbine à gaz ou de l'aéronef. On définit un ensemble de fonctions relatives à la turbine à gaz et pour lesquelles l'unité de régulation 100 a pleine autorité en fonctionnement sans défaut.

Les données d'entrées 60 peuvent être soit des informations logiques 62 d'allumage, démarrage, arrêt, extinction, etc. soit des mesures issues de capteurs 64. La **figure 2** illustre des données de capteurs 64 présents sur la turbine à gaz 50, mais il peut s'agir de capteurs relevant des données relatives à d'autres éléments de l'aéronef.

Les données de sorties 70 peuvent être soit des instructions de commandes pour des actionneurs, notamment pour la turbine à gaz (vanne carburant, vanne de lubrification, etc.), soit des informations indicatives (voyants, etc.).

Le détail des données d'entrées et de sorties pouvant être considérés dans le cadre de la description sera donné par la suite.

Le système de régulation 100 comprend une unité électronique de régulation primaire 120, définissant un canal primaire de traitement de données, et une unité électronique de régulation secondaire 140, définissant un canal secondaire de traitement de données.

L'unité primaire 120 est configurée pour traiter l'intégralité de l'ensemble des fonctions qu'un système de régulation classique doit traiter, ce qui signifie que l'intégralité des données d'entrées 60 peut transiter par le canal primaire et que l'unité primaire 120 peut réguler l'intégralité des sorties 70. L'unité secondaire 140, quant à elle, est configurée pour ne traiter qu'un sous-ensemble strict de l'ensemble de fonctions définies précédemment, c'est-à-dire un sous-ensemble des fonctions relatives aux entrées 60 et aux sorties 70. En d'autres termes, l'unité secondaire 140 ne reçoit qu'un sous-ensemble strict des données d'entrées 60 et donc ne régule qu'un sous-ensemble strict de données de sorties 70. A cette fin, l'unité secondaire 140 est conçue d'une façon dissimilaire, c'est-à-dire non-similaire, comparativement à l'unité primaire 120.

Le système de régulation 100 présente donc deux unités de régulation électronique 120, 140 asymétriques en matière de traitement des fonctions, et par conséquent des données d'entrée 60 et de sortie 70. Plus de détails seront donnés par la suite.

Ces sous-ensembles strict de données d'entrées et sorties précités comprennent les fonctions suffisantes pour maintenir en fonctionnement ou démarrer, selon un mode dégradé acceptable, la turbine à gaz 50. En d'autres termes, ces sous-ensembles ne comprennent pas les fonctions non-nécessaires au fonctionnement de l'aéronef, ou de la turbine à gaz, selon un mode dégradé.

Un mode dégradé est un mode dans lequel le démarrage ou la régulation de la turbine à gaz assure un minimum de performances, requis pour le fonctionnement vital de l'aéronef.

Par exemple, dans un mode dégradé, la turbine à gaz démarre sans tenir compte de l'altitude ou de la température de l'air.

Un module de sélection et de commutation 160 est prévu pour sélectionner le canal secondaire 140 en fonction de l'état de fonctionnement de l'unité primaire 120. En cas de défaut ou de défaillance de l'unité primaire 120, l'unité secondaire prendra la main sur la commande et la régulation de la turbine 50. Le cas d'une défaillance de l'unité secondaire sera explicité par la suite.

Par « en défaut », on entend « défaillante ».

A l'inverse des FADEC double canal qui redonde l'intégralité des fonctions, et donc de leur données d'entrées 60 et de sorties 70 associées, le système de régulation 100 effectue une redondance que pour ces fonctions précitées, à l'aide de l'unité secondaire 140, d'où l'appellation de « redondance partielle ».

Cette redondance partielle, ou simplifiée, assure les fonctions permettant de démarrer le moteur en mode dégradé ou de maintenir le moteur en fonctionnement dégradé, lorsque l'unité primaire 120 est défaillante.

En effet, il est possible de commander un aéronef et sa turbine à gaz 50 sans avoir recours à l'intégralité des informations disponibles. L'aéronef ne fonctionne alors pas en mode optimal mais il existe plusieurs autres modes de fonctionnement de l'aéronef, comme le mode dégradé, qui nécessite seulement certaines entrées pour générer des sorties correspondantes. Ces entrées-là et ces sorties-là sont associées au sous-ensemble strict des fonctions dites « vitales », ou « essentielles », ou encore « critiques ». On associe les références 60v et 70v pour les entrées et sorties dites « vitales » et les références 60n et 70n pour les entrées et sorties dites « non-vitales ». Des fonctions de surveillances minimales peuvent être considérées comme vitales, dans la mesure où elles garantissent la sécurité du système.

Le système de régulation 100 permet de faire transiter par le canal secondaire les fonctions vitales en cas de défaillance du canal primaire, c'est-à-dire que l'unité secondaire 140 doit être capable de traiter ces fonctions lorsque l'unité primaire 120 n'est pas en mesure de le faire. Par exemple, le canal secondaire140 reprend la main sur les actionneurs identifiés comme vitaux quand un défaut est observé sur la canal primaire 120.

Cette commutation doit limiter l'état transitoire associé au basculement d'un canal à l'autre.

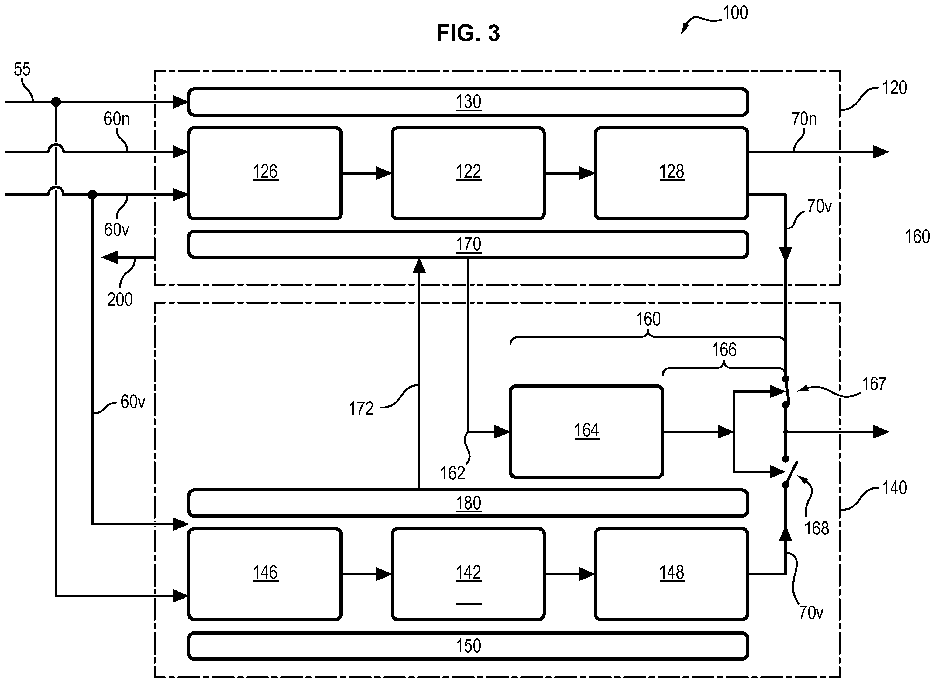

Afin de vérifier le fonctionnement du FADEC 100, chacune des unités 120, 140 comprend un module de surveillance 170, 180 respectifs (voir **figure 3****),** aussi appelé « *monitoring* ».

Chaque module de surveillance 170, 180 peut surveiller l'état de son unité 120, 140 et établir un statut d'opérabilité.

En outre, un module de sélection et de commutation 160, est prévu, pour permettre le basculement du premier canal vers le deuxième canal lors que le premier canal est identifié comme étant en défaut. Le module 160 est en communication avec le module de surveillance 170 de l'unité primaire 120.

Le module 160 comprend deux sous-dispositifs : un dispositif de sélection 164, qui reçoit des informations du module de surveillance 170 via une communication 162, et un dispositif de commutation 166, piloté par le dispositif de sélection 164.

Ainsi, dès lors que le dispositif de sélection 164 reçoit une information relative à une anomalie au niveau de l'unité primaire 120, détectée par le module de surveillance 170, il pilote le dispositif de sélection 164 qui provoque la commutation entre les deux canaux. L'unité primaire 120 est sélectionnée pour réguler la turbine 50 tant que l'unité primaire 120 n'est pas en défaut. Dès qu'un défaut est détecté sur l'unité primaire 120, l'unité secondaire 140 est commutée pour commander et réguler la turbine à gaz 50.

Comme indiqué précédemment, l'unité secondaire 140 forme un canal de redondance dissimilaire, comparativement à l'unité primaire 120. Cette absence de similarité peut se manifester sous différentes formes, cumulables : blocs fonctionnels différents, architectures différentes, composants différents, ...

En revanche, il ne s'agit pas simplement d'une reconfiguration logicielle du canal secondaire d'un FADEC double canal tel que présenté dans l'introduction : l'unité secondaire 140 est aussi matériellement différente de l'unité primaire 120.

Dans un mode de réalisation, l'unité primaire 120 est réalisée d'une façon connue à l'aide d'un circuit numérique, typiquement avec un microcontrôleur 122 qui exécute du code logiciel et l'unité secondaire 140 est réalisée à l'aide d'un circuit analogique ou d'un circuit logique programmable sans logiciel 142, c'est-à-dire un composant n'exécutant pas des lignes de codes. L'unité primaire 120 est alors essentiellement telle qu'existante dans les FADEC double canal.

La dissimilarité peut aussi se manifester dans le temps de cycle et les temps de calcul. Du fait de la simplicité de l'unité secondaire 140 par rapport à l'unité primaire 120, l'unité secondaire 140 présente avantageusement des temps caractéristiques plus courts que ceux de l'unité primaire 120.Cette désynchronisation temporelle ou fréquentielle des deux canaux, permet de ne pas avoir les mêmes points de susceptibilité vis des perturbateurs CEM (compatibilité Electro Magnétique): les deux unités seront donc dissimilaires vis-à-vis des perturbations CEM temporelles ou fréquentielles. En effet les circuits de l'unité primaire 120 et de l'unité secondaire 140 fonctionnant à des fréquences différentes, leurs comportements vis-à-vis des perturbateurs CEM seront aussi différents. Cette dissimilarité temporelle ou fréquentielle renforce la tenue aux perturbateurs CEM au niveau FADEC global 100 : si l'unité primaire est mise en défaut par un perturbateur CEM, l'unité secondaire 140 prendra la main et ne sera pas affectée par ce même perturbateur.

Le fait d'utiliser une unité secondaire 140 dissimilaire et simplifiée permet de limiter les risques de pannes liées aux causes communes entre le canal primaire et le canal secondaire, et aussi les pannes liées au nombre de composants.

En limitant le nombre de composants et leur complexité, la fiabilité intrinsèque de l'unité secondaire 140 est améliorée. En particulier, l'unité secondaire 140 comporte strictement moins de composants que l'unité primaire 120 ou des composants strictement plus fiables du fait de leurs moindres complexités.

Les deux unités 120, 140 sont développées et fabriquées selon des méthodes standardisées ayant pour but d'empêcher l'occurrence et l'introduction de fautes dès la conception.

A l'inverse du FADEC double canal, pour lequel un défaut de mode commun, c'est-à-dire un défaut relatif à la conception et la fabrication, peut affecter les deux unités 11, 12 (voir **figure 1**) et donc les deux canaux, la dissimilarité de conception, et de fabrication, prémunit le système de régulation 100 de ce type de défaillances.

Les deux unités 120 et 140 peuvent ainsi traiter indépendamment les fonctions vitales, ce qui permet d'éviter la propagation d'un état erroné du canal primaire vers le canal secondaire, ou inversement.

L'alimentation en énergie électrique est facteur important de panne dans les FADEC, notamment à cause des variations de tensions et de courant que ce dernier peut subir.

Il est sur le principe préférable de dédoubler les alimentations 130, 150 des unités primaire 120 et secondaire 140 pour éviter un point de panne unique associé à un défaut du bloc alimentation.

Comme représenté en **figure 3****,** deux interfaces de gestion des alimentations 130, 150 reçoivent en entrée l'énergie depuis une source 55 et convertissent cette énergie en une tension et une intensité adaptées à son unité respective 120, 140. Les interfaces 130, 150 sont avantageusement intégrées aux unités 120, 140.

La source 55 est typiquement un réseau de bord, alimenté lui-même soit par un générateur principal, soit par un générateur auxiliaire entrainé par la turbine à gaz 50, soit par une batterie.

Dans l'unité primaire 120, des modules de conditionnement d'entrée 126 et de sorties 128, respectivement en amont et en aval du micro-contrôleur 122 le long du canal primaire sont prévus. Le module de conditionnement d'entrée 126 a pour fonction d'adapter les données d'entrée 60 et le module de conditionnement de sortie 128 a pour fonction d'adapter les données de sortie 70, pour qu'elles puissent ensuite aller commander des actionneurs par exemple. La **figure 3** illustre ce mode de réalisation.

Typiquement, le module de conditionnement 126 de l'unité primaire 120 convertit les signaux 60n et 60v en données numériques afin qu'elles puissent être traitées par le contrôleur 122.

Le module de conditionnement 128 de l'unité primaire 120 convertit les signaux issus du module 122 en signaux de puissance 70v et 70n capables de commander les actionneurs.

L'unité secondaire 140 comprend un contrôleur secondaire 142, ainsi que des modules de conditionnement d'entrée 146 et de sortie 148 respectivement en amont et en aval du contrôleur 142 le long du canal secondaire.

Typiquement, le module de conditionnement 146 de l'unité secondaire 140 convertit les signaux 60v en données numériques dans le cas où le module 142 est constitué d'un circuit logique programmable ou adapte et met en forme les signaux 60v dans le cas où le module 142 est constitué de fonctions analogiques.

Le module de conditionnement 148 de l'unité secondaire 140 convertit les signaux issus du module 142 en signaux de puissance 70v capables de commander les actionneurs.

On remarque ainsi que les composants entre les deux unités 122 et 142 sont différents par nature.

En l'absence de défaillance au sein du système de régulation 100, seule l'unité primaire 120 commande et régule la machine. Néanmoins, il est nécessaire de savoir quand même si l'unité secondaire 140 est opérationnelle, afin que la commutation se fasse sur une unité fonctionnelle au moment nécessaire. Par conséquent, il est nécessaire que l'unité secondaire 140 soit en état de fonctionnement et réalise les calculs associés à la régulation ou la commande de la machine comme si c'était elle qui était active pour commander la machine.

De plus l'unité secondaire 140 vérifie son bon fonctionnement au travers du module de surveillance 180. L'unité primaire 120 a l'accès à l'état de l'unité secondaire 140. Cette information étant alors connue, l'unité secondaire 140 défaillante peut être remplacée lors d'une opération de maintenance avant de lancer toute mission nécessitant une fiabilité opérationnelle de 10⁻⁶ (mission ETOPS pour un APU...).

Le module de surveillance 180 du canal secondaire permet d'analyser l'état d'opérabilité du canal secondaire et de l'unité secondaire 140.

Une communication 172 du canal secondaire vers le canal primaire est prévue : il s'agit typiquement d'un échange d'information entre le module de surveillance 180 et le module de surveillance 170..

Ainsi, lorsque le canal primaire est sollicité, l'unité de surveillance 170 récupère tout de même des informations relatives à l'état de l'unité secondaire 140 (i.e. le statut d'opérabilité) via la communication 172 et l'unité de surveillance 180. Ces données sont ensuite transmises par l'unité primaire 140, et typiquement par l'unité de surveillance 170, à un bus 200 d'avionique ou de maintenance, classiquement connu en lui-même. Les informations sont ensuite récupérables à partir de ce bus, afin d'informer des opérateurs de la nécessité du changement de l'unité secondaire 140 si celle-ci a été identifiée comme défaillante. A ce propos, on rappelle que l'unité primaire 120 doit être identifiée comme défaillante avant qu'une commutation vers l'unité secondaire 140 soit effectuée.

En revanche, l'état du canal secondaire n'entre pas en compte dans la commutation entre les deux canaux : le canal primaire est toujours actif, sauf lorsqu'une défaillance est détectée, auquel cas le canal secondaire prend le relai. En cas de défaut sur le canal secondaire, l'information sera transmise au bus 200 par le canal primaire mais cela n'aura aucun impact sur les commutations.

Les modules de surveillance 170, 180 effectuent des auto-tests, c'est-à-dire des tests sur leur propre canal respectif pour établir leur statut d'opérabilité : routine, chien de garde, circuit auto-testables, etc. Si une anomalie est détectée, l'information est envoyée soit vers le module de sélection et de commutation 160 dans le cas du canal primaire, soit vers le module de surveillance 170 de l'unité primaire 120 dans le cas du canal secondaire.

Le module de commutation 166 du module de sélection et de commutation 160 pilote typiquement deux interrupteurs 167 et 168 (voir **figure 3**). L'interrupteur 167 relie le canal primaire à une sortie du système 100 et l'interrupteur 168 relie le canal secondaire à la même sortie du système 100. Ces deux interrupteurs 167, 168 ne sont jamais dans le même état en même temps.

Le dispositif de sélection 164 a notamment pour fonction de déterminer l'instant le plus pertinent à partir duquel l'unité secondaire 140 prend le relai sur l'unité primaire 120. Il s'agit en outre d'éviter tout effet de transition majeur sur les performances de la turbine à gaz.

Alternativement, il est possible que l'unité primaire 120 comprenne deux entrées et deux sorties, respectivement pour les entrées vitales 60v/non-vitales 60n et les sorties vitales 70c/non-vitales 70n (voir **figure 3**). De la sorte, seule la sortie vitale de l'unité primaire 120 peut être désactivée à l'aide de l'interrupteur 167, la sortie non-vitale n'étant jamais déconnectée. Comme une défaillance concernant des sorties non-vitales 70n n'est pas critique, une telle architecture est tout à fait envisageable.

Les communications entre les deux unités sont préférablement limitées au strict minimum pour avoir deux unités 120, 140 les plus indépendantes possibles et ainsi contenir les pannes.

Des procédés de régulation sont associables au système de régulation asymétrique 100.

### Définition des paramètres vitaux et non-vitaux, ou primaires et secondaires, ou essentiels et non-essentiels

Pour que l'unité secondaire 140 soit plus fiable, son architecture est simplifiée et ne reçoit plus l'intégralité des données d'entrée 60 et ne commande plus l'intégralité des sorties 70.

L'unité secondaire 140 est configurée pour recevoir uniquement des données dites « vitales ».

L'acquisition de la vitesse de l'aéronef et la commande de carburant sont des paramètres considérés comme vitaux. Leurs données relatives sont donc redondées au travers du deuxième canal.

D'une façon générale, on qualifiera de vitaux les paramètres nécessaires pour faire tourner la turbine 50 d'une façon au moins dégradée en cas de panne de l'unité principale.

L'attribution à un paramètre du caractère vital ou non peut être effectuée de plusieurs façons.

Il existe des méthodes d'analyse connues et normées qui permettent de déterminer les fonctions qui sont vitales au fonctionnement de la turbine à gaz. On peut citer la FMEA (pour « *Failure Mode and Effects Analysis* » en anglais, aussi appelée « *Failure Modes* »), la FMECA (pour «*Failure Mode and Effects, and Criticity Analysis*) traduite en AMDEC (pour « Analyse des Modes de Défaillance, de leur Effets et de leur Criticité), ou encore le FMA (pour « *Failure Mode Avoidance* »).

Les paramètres pour lesquels on dispose de valeurs de repli suffisantes pour un fonctionnement de la turbine à gaz 50 sur une plage complète mais en mode dégradé seront considérés comme non-vitaux. Ces valeurs de repli peuvent être soit la dernière valeur mesurée, soit une valeur fixe par défaut. On choisit par exemple la valeur la plus pénalisante, de sorte que quelque que soit la valeur réelle, le système de régulation 100 considère en fait une valeur moins favorable.

Les paramètres qui n'engendrent pas l'arrêt de la machine ou de non démarrage en cas de la perte du dit paramètre ne sont pas redondés non plus.

La liste des fonctions critiques à redonder, c'est-à-dire qui doivent pouvoir être traitées par l'unité secondaire 140 en cas de défaillance de l'unité primaire 120, correspond à toutes les fonctions qui, en cas de panne, entrainent un arrêt ou un non-démarrage de la turbine à gaz 50. Les autres fonctions qui ont des effets mineurs vis-à-vis du fonctionnement de la turbine à gaz 50, c'est-à-dire qui n'entrainent pas l'arrêt ou le non-démarrage, ne sont pas redondées.

Ci-dessous se trouve une liste des paramètres essentiels, non exhaustive :
- Les entrées :
   ∘ Capteur de vitesse,
   ∘ Information logique : start/stop de la turbine,
- Les sorties :
   ∘ Moteur de lancement,
   ∘ Allumeurs,
   ∘ Doseur carburant,
   ∘ Vanne de purge d'huile,
   ∘ Voyants « Turbine à gaz On » et « Turbine à gaz Off ». Ci-dessous se trouve une liste des paramètres non-essentiels, non exhaustive :
- Les entrées :
   ∘ Capteur de température d'entrée d'air turbine,
   ∘ Capteur de température de sortie de gaz,
   ∘ Capteur de limaille huile,
   ∘ Capteur de colmatage filtre à huile,
   ∘ Capteur de niveau d'huile,
   ∘ Capteur de pression d'huile,
   ∘ Capteur de température huile,
   ∘ Capteur de colmatage filtre à carburant,
   ∘ Capteur de température carburant,
   ∘ Capteur de pression ambiante,
   ∘ Capteur de température ambiante,
   ∘ Informations logiques :
      ▪ SOL-VOL
      ▪ Informations 'WARNING' des équipements (boitier d'allumage, pompe à carburant, contrôleur alternateur, etc.),
- Les sorties :
   ∘ Voyants « Turbine à gaz PRETE » et « Turbine à gaz START »,
   ∘ Liaisons d'instrumentations.

Par exemple, si la donnée de la température d'entrée d'air n'est pas connue, le système de régulation 100 considérera une température de repli (exemple température de 60°C, qui est la température la plus contraignante pour la machine).

## Revendications

1. Système de régulation électronique (100) d'une turbine à gaz (50) configuré pour réguler un ensemble de fonctions associées à des données d'entrées (60) logiques ou issues de capteurs et associées à des données de sorties (70) notamment pour actionneur, ledit système (100) comprenant :
- une unité électronique de régulation primaire (120), configurée pour traiter l'intégralité de l'ensemble de fonctions,
- une unité électronique de régulation secondaire (140),
- un module de sélection et de commutation (160) pour la sélection et la commutation de l'une ou l'autre des unités primaire et secondaire (120, 140) pour la régulation de la turbine à gaz (50) en fonction d'un état de fonctionnement de ladite unité primaire (120),
**caractérisé en ce que** le système de régulation électronique (100) est asymétrique, l'unité électronique de régulation secondaire (140), partiellement redondante avec l'unité primaire (120), est configurée pour ne traiter qu'un sous-ensemble strict de fonctions suffisantes pour maintenir en fonctionnement ou démarrer la turbine à gaz (50) selon un mode dégradé acceptable lorsque l'unité primaire (120) est en défaut.

2. Système de régulation selon la revendication 1, dans lequel le sous-ensemble strict de fonctions suffisantes correspond aux fonctions vitales de la turbine à gaz (50).

3. Système de régulation selon l'une quelconque des revendications précédentes, dans lequel l'unité primaire (120) et l'unité secondaire (140) sont dissimilaires en matière d'architecture.

4. Système de régulation électronique (100) selon l'une quelconque des revendications précédentes, dans lequel l'unité primaire (120) est implémentée par un circuit numérique et l'unité secondaire (140) est implémentée par un circuit analogique ou un circuit logique programmable.

5. Système de régulation électronique (100) selon l'une quelconque des revendications précédentes, dans lequel l'unité primaire (120) comprend un micro-contrôleur piloté par une solution logicielle et l'unité secondaire (140) comprend un circuit logique programmable sans logiciel.

6. Système de régulation (100) selon l'une quelconque des revendications précédentes, dans lequel l'unité primaire (120) est configurée pour transmettre à un bus (200) avionique ou de maintenance le statut d'opérabilité de l'unité secondaire (140), ledit statut d'opérabilité étant réalisée par l'unité secondaire elle-même, afin de permettre le remplacement de l'unité secondaire (140) seule ou du système de régulation (100).

7. Système de régulation (100) selon l'une quelconque des revendications précédentes, dans lequel l'unité secondaire (140) ne traite pas les entrées (60n) suivantes :
∘ Capteur de température d'entrée d'air turbine,
∘ Capteur de température de sortie de gaz,
∘ Capteur de limaille huile,
∘ Capteur de colmatage filtre à huile,
∘ Capteur de niveau d'huile,
∘ Capteur de pression d'huile,
∘ Capteur de température huile,
∘ Capteur de colmatage filtre à carburant,
∘ Capteur de température carburant,
∘ Capteur de pression ambiante,
∘ Capteur de température ambiante,
∘ Informations logiques :
▪ SOL-VOL
▪ Informations 'WARNING' des équipements (boitier d'allumage, pompe à carburant, contrôleur alternateur, etc.),

8. Système de régulation (100) selon l'une quelconque des revendications précédentes, dans lequel l'unité secondaire (140) traite uniquement les entrées (60v) suivantes :
∘ Capteur de vitesse,
∘ Information logique : start/stop de la turbine,
Commande les sorties (70v) suivantes :
∘ Moteur de lancement,
∘ Allumeurs,
∘ Vanne de purge d'huile,
∘ Voyants « Turbine à gaz On » et « Turbine à gaz Off ».
Et régule le doseur carburant.

9. Système de régulation (100) selon l'une quelconque des revendications précédentes, dans lequel l'unité secondaire (140) comprend moins de composants que l'unité primaire (120), afin d'obtenir une fiabilité améliorée.

10. Ensemble comprenant une turbine à gaz (50) et un système de régulation (100) selon l'une quelconque des revendications précédentes.

## Patentansprüche

1. Elektronisches Regelsystem (100) einer Gasturbine (50), das so konfiguriert ist, dass es eine Gruppe von Funktionen regelt, die mit logischen Eingangsdaten (60) verbunden sind oder aus Sensoren hervorgegangen und Ausgangsdaten (70) insbesondere für ein Betätigungselement zugeordnet sind, wobei das System (100) Folgendes umfasst:
- eine primäre elektronische Regeleinheit (120), die so konfiguriert ist, dass sie die gesamte Gruppe von Funktionen verarbeitet,
- eine sekundäre elektronische Regeleinheit (140),
- ein Wahl- und Schaltmodul (160) zum Auswählen und Schalten der einen oder der anderen der Primär- und Sekundäreinheit (120, 140) zum Regeln der Gasturbine (50) je nach einem Betriebszustand der Primäreinheit (120),
**dadurch gekennzeichnet, dass** das elektronische Regelsystem (100) asymmetrisch ist, die teilweise mit der primären Einheit (120) redundante sekundäre elektronische Einheit (140) so konfiguriert ist, dass sie nur eine strikte Teilgruppe von Funktionen verarbeitet, die ausreichen, um die Gasturbine (50) in Betrieb zu halten oder sie in einem akzeptablen verschlechterten Modus zu starten, wenn die Primäreinheit (120) ausfällt.

2. Regelsystem nach Anspruch 1, wobei die strikte Teilgruppe ausreichender Funktionen den Vitalfunktionen der Gasturbine (50) entspricht.

3. Regelsystem nach einem beliebigen der vorstehenden Ansprüche, bei dem die Primäreinheit (120) und die Sekundäreinheit (140) architektonisch ungleichartig sind.

4. Elektronisches Regelsystem (100) nach einem beliebigen der vorstehenden Ansprüche, wobei die Primäreinheit (120) durch eine digitale Schaltung und die Sekundäreinheit (140) durch eine analoge Schaltung oder eine programmierbare Logikschaltung implementiert ist.

5. Elektronisches Regelsystem (100) nach einem beliebigen der vorstehenden Ansprüche, wobei die Primäreinheit (120) einen Mikrocontroller aufweist, der von einer Softwarelösung gesteuert wird, und die Sekundäreinheit (140) eine programmierbare Logikschaltung ohne Software beinhaltet.

6. Regelsystem (100) nach einem beliebigen der vorstehenden Ansprüche, wobei die Primäreinheit (120) so konfiguriert ist, dass sie die Betriebsfähigkeit der Sekundäreinheit (140) an einen Avionik- (200) oder Instandhaltungsbus übertragen, wobei die Betriebsfähigkeit durch die Sekundäreinheit selbst erreicht wird, um das Ersetzen der Sekundäreinheit (140) allein oder des Regelsystems (100) zu ermöglichen.

7. Regelsystem (100) nach einem beliebigen der vorstehenden Ansprüche, wobei die Sekundäreinheit (140) die folgenden Eingaben (60n) nicht verarbeitet:
∘ Turbinenlufteinlass-Temperaturfühler,
∘ Gasaustritts-Temperaturfühler,
∘ Ölspansensor,
∘ Ölfilter-Verstopfungssensor,
∘ Ölstandssensor,
∘ Öldrucksensor,
∘ Öltemperaturfühler,
∘ Kraftstoff-Verstopfungssensor,
∘ Kraftstofftemperaturfühler,
∘ Umgebungsdrucksensor,
∘ Umgebungstemperaturfühler,
∘ Logikdaten:
▪ BODEN-FLUG
▪ Informationen 'WARNUNG' der Ausrüstungen (Zündbox, Kraftstoffpumpe, Lichtmaschinensteuerung, usw.),

8. Regelsystem (100) nach einem beliebigen der vorstehenden Ansprüche, bei dem die Sekundäreinheit (140) nur die folgenden Eingaben (60V) verarbeitet:
∘ Drehzahlsensor,
∘ Logikdaten: Start/Stopp der Turbine,
Steuert die folgenden Ausgaben (70v):
∘ Startmotor,
∘ Zünder,
∘ Ölablassventil,
∘ Kontrolllampen "Gasturbine An" und "Gasturbine Aus".
Und regelt die Kraftstoffdosierung.

9. Regelsystem (100) nach einem beliebigen der vorstehenden Ansprüche, wobei die Sekundäreinheit (140) weniger Komponenten als die Primäreinheit (120) umfasst, um eine verbesserte Zuverlässigkeit zu erzielen.

10. Aggregat, umfassend eine Gasturbine (50) und ein Regelsystem (100) nach einem beliebigen der vorstehenden Ansprüche.

## Claims

1. An electronic regulation system (100) for a gas turbine (50), configured to regulate a set of functions associated with logic input data (60) or originating from sensors and associated with output data (70) in particular for an actuator, said system (100) comprising:
- a primary electronic regulation unit (120), configured to process the entire set of functions,
- a secondary electronic regulation unit (140),
- a selection and switching module (160) for selecting and switching either of the primary and secondary units (120, 140) for the regulation of the gas turbine (50) according to an operating state of said primary unit (120),
**characterized in that** the electronic regulation system (100) is asymmetrical, the secondary electronic regulation unit (140), partially redundant with the primary unit (120), is configured to process only one strict subset of sufficient functions to maintain in operation or start the gas turbine (50) according to an acceptable degraded mode when the primary unit (120) is in default.

2. The regulation system according to claim 1, wherein the strict subset of sufficient functions corresponds to the vital functions of the gas turbine (50).

3. The regulation system according to any one of the preceding claims, wherein the primary unit (120) and the secondary unit (140) are dissimilar in terms of architecture.

4. The electronic regulation system (100) according to any one of the preceding claims, wherein the primary unit (120) is implemented by a digital circuit and the secondary unit (140) implemented by an analog circuit or a programmable logic device.

5. The electronic regulation system (100) according to any one of the preceding claim, wherein the primary unit (120) comprises a microcontroller driven by a software solution and the secondary unit (140) comprises a programmable logic device without software.

6. The regulation system (100) according to any one of the preceding claims, wherein the primary unit (120) is configured to transmit to an avionic bus (200) or to a maintenance bus the status of operability of the secondary unit (140), said operability status being achieved by the secondary unit itself, so as to allow the replacement of the secondary unit (140) alone or of the regulation system (100).

7. The regulation system (100) according to any one of the preceding claims, wherein the secondary unit (140) does not process the following inputs (60n):
∘ Turbine air input temperature sensor,
∘ Gas output temperature sensor,
∘ Oil filing sensor,
∘ oil filter clogging sensor,
∘ Oil level sensor,
∘ Oil pressure sensor,
∘ Oil temperature sensor,
∘ Fuel filter clogging sensor,
∘ Fuel temperature sensor,
∘ Ambient pressure sensor,
∘ Room temperature sensor,
∘ Logical information:
▪ SOL-VOL
▪ 'WARNING' information of the equipment (ignition box, fuel pump, alternator controller, etc.),

8. The regulation system (100) according to any one of the preceding claims, wherein the secondary unit (140) processes only the following inputs (60v):
∘ Speed sensor,
∘ Logical information: start/stop of the turbine, Controls the following outputs (70v):
∘ Launch engine,
∘ Igniters,
∘ Oil drain valve,
∘ Indicators "Gas Turbine On" and "Gas Turbine Off".
And regulates the fuel metering valve.

9. The regulation system (100) according to any one of the preceding claims, wherein the secondary unit (140) comprises less components than the primary unit (120), so to obtain improved reliability.

10. An assembly comprising a gas turbine (50) and a regulation system (100) according to any one of the preceding claims.
